# EUROPEAN PATENT SPECIFICATION

(11) **EP 2 327 736 B1**
(45) Date of publication and mention of the grant of the patent: **18.03.2015**
(21) Application number: 09809269.5
(22) Date of filing: 01.09.2009
(51) Int. Cl.: C08G 63/87, C08G 63/08, C08G 69/20, C08G 77/08, B01J 31/04, C08G 63/78, C08G 65/26, C08G 73/10, C08G 75/06, C08G 63/82

(54) **METHOD OF ADJUSTABLE AND CONTROLLABLE RING-OPENING POLYMERIZATION OF CYCLIC COMPOUNDS BY CATALYSIS OF CARBENE DERIVATIVES**
VERFAHREN ZUR ANPASSBAREN UND STEUERBAREN RINGÖFFFNUNGSPOLYMERISATION CYCLISCHER VERBINDUNGEN MITTELS KATALYSE VON CARBENDERIVATEN
PROCÉDÉ AJUSTABLE ET CONTRÔLABLE DE POLYMÉRISATION DE COMPOSÉS CYCLIQUES PAR OUVERTURE DE CYCLE PAR CATALYSE DE DÉRIVÉS DU CARBÈNE

(30) Priority: 01.09.2008 CN 200810146619
(43) Date of publication of application: 01.06.2011
(73) Proprietor: Nanjing University of Technology, Nanjing, Jiangsu 210009 (CN)
(72) Inventor: LI, Zhenjiang, Nanjing Jiangsu 210009 (CN); KAN, Suli, Nanjing Jiangsu 210009 (CN); WANG, Yanqin, Nanjing Jiangsu 210009 (CN); GUO, Chang, Nanjing Jiangsu 210009 (CN); SONG, Ping, Nanjing Jiangsu 210009 (CN); SHENG, Shichuan, Nanjing Jiangsu 210009 (CN); OUYANG, Pingkai, Nanjing Jiangsu 210009 (CN)
(74) Representative: Kramer Barske Schmidtchen Patentanwälte PartG mbB
(86) International application number: PCT/CN2009/073675
(87) International publication number: WO 2010/022684

(56) References cited:
- WO-A1-2005/073279
- CN-A- 1 687 176
- CN-A- 1 706 878
- JP-A- 2006 137 733
- US-A1- 2008 051 608
- DOVE A P ET AL: "N-Heterocyclic carbenes: Effective organic catalysts for living polymerization", POLYMER, ELSEVIER SCIENCE PUBLISHERS B.V, GB, vol. 47, no. 11, 17 May 2006 (2006-05-17), pages 4018-4025, XP028061046, ISSN: 0032-3861, DOI: 10.1016/J.POLYMER.2006.02.037 [retrieved on 2006-05-17]
- OLIVIER COULEMBIER ET AL: "Alcohol Adducts of N -Heterocyclic Carbenes: Latent Catalysts for the Thermally-Controlled Living Polymerization of Cyclic Esters", MACROMOLECULES, vol. 39, no. 17, 1 August 2006 (2006-08-01), pages 5617-5628, XP055065316, ISSN: 0024-9297, DOI: 10.1021/ma0611366
- ANNE GROTEVENDT ET AL.: 'Efficient catalysts for telomerization of butadiene with amines.' TETRAHEDRON LETTERS. vol. 48, no. 52, October 2007, pages 9203 - 9207, XP022368229
- ADRIANA TUDOSE ET AL.: 'Imidazol(in)ium-2-carboxylates as N-heterocyclic carbene precursors in ruthenium-arene catalysts for olefin metathesis and cyclopropanation.' JOURNAL OF ORGANOMETALLIC CHEMISTRY vol. 691, no. 24-25, August 2006, pages 5356 - 5365, XP025188897

## Description

### Technical Field

The current invention relates to the field of polymeric materials, involving the ring-opening polymerization of a variety of cyclic compounds (including cyclic monomer and cyclic oligomers of low molecular weight) that synthesizes polymers having a high molecular weight and low dispersity, particularly involving using carbene derivatives to catalyze the ring-opening polymerization of cyclic compounds to obtain polymeric materials.

### Background

Currently, most of the polymers that we use in our daily life, such as polystyrene, polyolefins, PVC, etc., are difficult to degrade in nature. Their waste causes serious pollution to the environment. Therefore, biodegradable polyester polymeric materials have far-reaching significance: aliphatic polyester polymer is degradable gradually in water, enzymatic or microbial environment, which can solve the increasingly serious environmental problems; and small molecule compounds produced by the degradation that can be recycled and reused, easing the world energy shortage crisis; aliphatic polyester has good biocompatibility, with no significant toxicity on and rejections from the living organisms and can be well applied in the biomedical field.

Ring-opening polymerization is a method of preparation of polyester and its products. Catalysts often used in ring-opening polymerization are metal-containing catalysts such as organometal compounds of aluminum, tin, zinc, yttrium, commonly stannous octanoate and alkoxy aluminum, etc. There are many public literature and patents that report such applications. Furthermore, there are many such processes used in producing polymer (Kato, M., et al., Biomacromolecules, 2007, 8, 3590-3596; Olivier Coulembier et al., Progress in Polymer Science, 2006, 31, 723-747; CN1544504, US5235031, US5696219). However, due to metal residues, its application is restricted, especially in the field of medicine and microelectronics.

*N*-heterocyclic carbene catalysts are pure organic catalysts and, because of their outstanding catalytic activity for ring-opening polymerization, have been researched more in recent years. However, because the *N*-heterocyclic carbenes are very active and extremely sensitive in the air and water, their life in the air is only a few seconds. Consequently, it is difficult to use them directly for catalytic polymerization. Therefore, the commonly used *N*-heterocyclic carbene precursors or adducts of *N*-heterocyclic carbenes are, after being activated, used to catalyze polymerization.

In 2001, Eric F. Connor et al. (Eric F. Connor et al., Journal of the American Chemical Society, 2002, 124, 914-915) for the first time used *N*-heterocyclic carbene precursor to catalyze lactone ring-opening polymerization, producing polylactone with a specific molecular weight and a narrow molecular weight distribution of polylactone. Subsequently, a variety of research reports have appeared (Andrew P. Dove et al., Polymer, 2006, 47, 4018-4025; US2006100365; CN1918215A; FR2864543; WO2005073279; EP1701992), enlarging the structural types of the *N*-heterocyclic carbene catalysts and the type of cyclic monomers that are suitable to be catalyzed by *N*-heterocyclic carbene catalysts. For example, the cyclic monomer can be lactide, lactone, carbonate ester, and silane ester. Such catalysts may also be used with polyethylene glycol oligomers functionalized by a single hydroxyl group as an initiator to perform lactone ring-opening, resulting in polymerization to obtain block copolymer. In CN1918215A and WO2005073279, *N*-heterocyclic carbene precursors are used as the catalyst for ring-opening polymerization or polysiloxane redistribution method to prepare the polysiloxane. US2007252311 discloses using *N*-heterocyclic carbene precursor to catalyze large molecule cyclic ester oligomer ring-opening polymerization, which provides a fast polymerization reaction, high monomer conversion rate, and a product of relatively high molecular weight. D. A. Culkin et al. (D. A. Culkin et al., Angewandte Chemie International Edition, 2007, 46, 2627-2630) used *N*-heterocyclic carbene precursor to catalyze ring-opening polymerization of lactide, to carry out zwitterionic polymerization in the absence of alcohol to prepare cyclic macromolecules of polylactic acid.

Using *N*-heterocyclic carbene precursors as the catalyst for the ring-opening polymerization catalyst provides high selectivity and high polymerization speed. However, this process must first generate corresponding *N*-heterocyclic carbenes in the presence of alkali, and, since separation is difficult, must carry out direct polymerization in the same system. However, the unreacted alkali and its salt will induce ring opening and degradation of the polymer. As a result, the polymerization becomes complex and difficult to control. The residual alkali and salt also have adverse effects on the performance and the appearence of polymer and materials.

Therefore, scientists have studied the more stable adducts of *N*-heterocyclic compounds, such as compounds generated by reacting *N*-heterocyclic carbenes with small molecules H-CCl₃, H-C₆F₅, H-OR, etc., using them as the catalyst for ring-opening polymerization of cyclic monomers. Through controlling the polymerization conditions, H-CCl₃, H-C₆F₅, H-OR can be eliminated by releasing them from the adducts of *N*-heterocyclic carbene so that the carbene can catalyze the polymerization reaction (Szilárd Csihony et al., Advanced Synthesis and Catalysis, 2004, 346, 1081-1086; Olivier Coulembier et al., Angewandte Chemie International Edition, 2005, 44, 4964-4968; Szilárd Csihony et al., Journal of the American Chemical Society, 2005, 127, 9079-9084). But the small molecules removed stay in the reaction system, interfering with the polymerization and at the same time introducing impurities into the reaction system and the product polylactic acid. Furthermore, all currently reported research is conducted in dilute solutions, which is not conducive to large-scale production.

To overcome the above-described deficiencies, it is necessary to introduce a stable structure, easy to use, well controllable polymerization process, which is safe and has residual catalyst. The synthesis of carbon dioxide adducts of carbenes are reported only in recent years (J. D. Holbrey et al., Chemical Communications, 2003, 28-29; H. A. Duong et al., Chemical Communications, 2004, 112-113). Voutchkova (A. M. Voutchkova et al., Journal of the American Chemical Society, 2005, 127, 17624 - 17625) reported a method for preparing carbene-metal complex that uses disubstituted carbene CO₂ adducts as the transfer reagent. That is to take advantage of the stability of carbon dioxide adducts of carbenes in air and water as well as their ability to release CO₂ to prepare the complexes of carbenes with metal rhodium, ruthenium and lead, respectively. Subsequently, Tudose et al. used carbene-metal complexes prepared using the above described method to catalyze Suzuki-Miyaura coupling reaction, olefin metathesis, and cyclopropanation reactions (A. Tudose et al., Tetrahedron Letters, 2006, 47, 8529-8533; A. Tudose et al., Journal of Organometallic Chemistry, 2006, 691, 5356-5365). However, currently there is no reporting on using carbon dioxide adducts of carbene as the catalyst. Available reports are limited to using the adducts as the transfer reagent for *N*-heterocyclic carbene to prepare carbene-metal complexes, but not as a catalyst for ring-opening polymerization of cyclic compounds.

O. Coulembier et al., Macromolecules 2006, 39, 5617-5628, describe alcohol adducts of N-heterocyclic carbenes as latent catalysts for the thermally-controlled living polymerization of cyclic esters.

US 2008/0051608 A1 relates to the preparation of alpha-hydroxy ketones via carbene-catalyzed Umpolung reaction of aldehydes.

### Summary

The technical problem addressed by the invention disclosed herein is to provide a method of controlled ring-opening polymerization of cylic compounds using carbene derivatives, obtaining biodegradable polymeric materials that are of high molecular weight, narrow polydispersity, and contain no metallic impurities.

To address the technical problem described above, the present invention utilizes the feature of carbon dioxide adducts of carbenes, which, under certain conditions, can remove the carboxyl group at the 2-position to generate corresponding carbenes, so that the adducts act as a carbene transfer reagent. The adducts are used as the catalysts for ring-opening ring polymerization of cyclic compounds.

Through research, this invention also discovered that different substituents on the heterocyclic rings of the carbon dioxide adducts affect the decarboxylation temperature at the 2-position. While the ring-opening polymerization of the cyclic compound requires a suitable reaction temperature and its range of variation based on the requirements on the property of polymers and the polymerization process conditions, to ensure that the decarboxylation of CO₂ adducts of carbenes occur in the same temperature range of the ring-opening polymerization in order to produce active catalyst to promote the catalytic reaction, thermal gravimetric analysis was conducted on CO₂ adducts of carbenes having different substituents on the structure of carbenes. The temperature and rate of decarboxylation of CO₂ adducts of carbenes of various structure were obtained. Among them, a group of suitable catalysts were chosen so that the decarboxylation temperature and the reaction temperature of lactide ring-opening polymerization can properly match. At the suitable reaction temperature, the catalytic ring-opening polymerization can be effectively carried out. Therefore, through controlling its reaction temperature, lactide ring-opening polymerization catalyzed by CO₂ adducts of carbenes becomes controllable.

In addition, CO₂ adducts of carbenes are purely organic catalysts, catalyzing ring-opening polymerization of cyclic compounds to get polymers without any metallic residue. Such polymers can be widely applied in various fields. The carbon dioxide is released from the reaction system, which does not introduce impurities to the reactants.

The terminal structure and the molecular weight can be controlled by adding a reagent having active hydrogen (R-O-H) as an initiator in the ring-opening polymerization reaction. The terminal structure of the obtained polymer are R-O- and -OH respectively. While the ratio of the cyclic compound and initiator determines the target molecular weight of the polymer, when there is an initiator, *N*-heterocyclic carbene catalyzed ring-opening polymerization of cyclic compounds is a living polymerization, resulting in polymers with a relatively narrow molecular weight distribution.

The technical solution in this invention is as follows:

A method of making polylactic acid using CO₂ adducts of carbenes, wherein the adducts have a structure represented by formula (I): 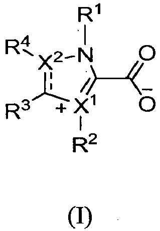 wherein the dotted line together with the solid line parallel to the dotted line represents a single bond or a double bond; X¹ is chosen from S and N; X² is chosen from C and N; R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a phenyl group having one or more substituents chosen from a halogen atom, a hydroxyl group, an alkyl group, and a cyano group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group.

Alternatively, R³ and R⁴ are connected to form cycloalkyl or cycloalkenyl groups having 3 to 8 carbon atoms; or R³ and R⁴ are connected to form a benzene ring; or R² and R³ are connected to form 5- or 6-*N*-heterocyclic compounds that do not have any substituent.

Type (I) carbene carbon dioxide as shown in the specific structure of the adduct can be type (II), type (III), type (IV) or type (V):

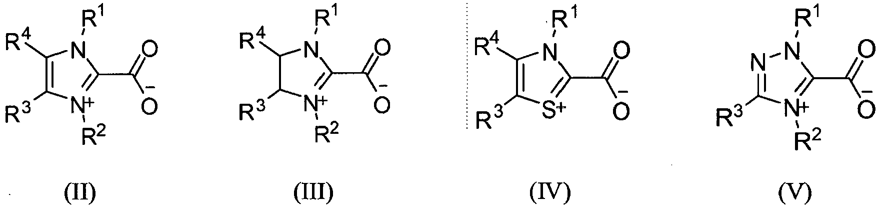

In formula (II), R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a substituted phenyl group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group.

Alternatively, R³ and R⁴ are connected to form cycloalkenyl groups having 3 to 8 carbon atoms; or R³ and R⁴ are connected to form a benzene ring.
In formula (III), R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a substituted phenyl group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group.

Alternatively, R³ and R⁴ are connected to form cycloalkyl groups having 3 to 8 carbon atoms.

In formula (IV), R¹ is chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a substituted phenyl group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group.

Alternatively, R³ and R⁴ are connected to form cycloalkenyl groups having 3 to 8 carbon atoms; or R³ and R⁴ are connected to form a benzene ring.

In formula (V), R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a substituted phenyl group;
R³ is chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group;
alternatively, R² and R³ are connected to form 5- or 6-*N*-heterocyclics that do not have any substituent.

The above-described substituted phenyl group can have one, two, or three substituents. The substituents can be the same or different, chosen from alkyl groups having 1-5 carbon atoms, alkyl groups having 1-5 carbon atoms and have one or more substituents chosen from halogen atoms, hydroxyl, phenyl, and cyano group, halogen atom, hydroxyl, alkoxy, and cyano.

In the above-described method of controlled ring-opening polymerization of cyclic compounds, cyclic compounds can be selected from one or more of the following monomers: 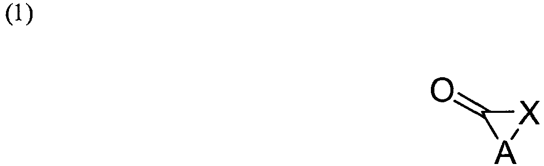 wherein A is [-(CR¹R²)-]ₙ, n is an integer from 2 to 10; R¹ and R² are the same or different and are selected from H, alkyl groups with 1 to 5 carbon atoms, and alkyl groups with 1 to 5 carbon atoms and having substituents chosen from halogen atoms or hydroxyl groups. X is chosen from O and N. 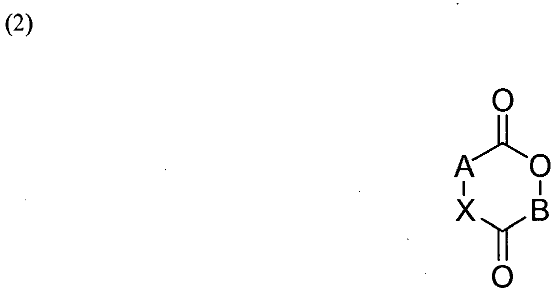 wherein A and B are [-(CR¹R²)-]ₙ, n is an integer from 2 to 10, A and B can be the same or different. R¹ and R² are the same or different and are selected from H, alkyl groups with 1 to 5 carbon atoms, and alkyl groups with 1 to 5 carbon atoms and having substituents chosen from halogen atoms or hydroxyl groups. X is chosen from O and NH. 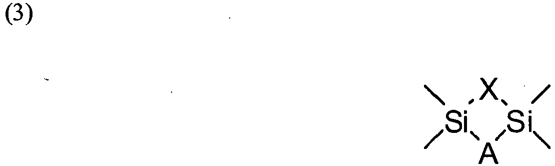 or cylic compounds having 2 to 5 structural units 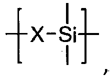 wherein A is [-(CR¹R²)-]ₙ, n is an integer from 2 to 10; R¹ and R² are the same or different and are selected from H, alkyl groups with 1 to 5 carbon atoms, and alkyl groups with 1 to 5 carbon atoms and having substituents chosen from halogen atoms or hydroxyl groups. X is chosen from O, N and S. 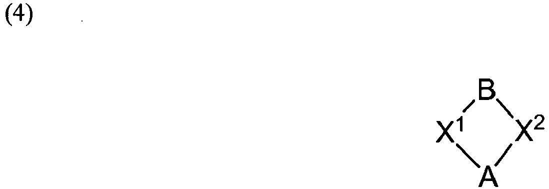 wherein A is [-(CR¹R²)-]ₙ, n is an integer from 2 to 10; R¹ and R² are the same or different and are selected from H, alkyl groups with 1 to 5 carbon atoms, and alkyl groups with 1 to 5 carbon atoms and having substituents chosen from halogen atoms or hydroxyl groups. B is chosen from CH₂-O-CH₂, CH₂, and C=O. X¹ and X² are the same or different and are chosen from O, N, S, and Si.

The cyclic compound may also be a macrocylic oligomer obtained by pre-polymerization of one or more cyclic monomers (1) to (4), and the macrocyclic oligomer contains 3 to 20 monomers. In the above-described method of controlled ring-opening polymerization, the molar ratio of CO₂ adducts of carbene and the cyclic compound is 1:50 to 1000, preferably 1:50 to 800, more preferably 1:50 to 500. The method may also employ an initiator. The molar ratio of the initiator and the cyclic compound is 1:2 to 10000, preferably 1:50 to 1000, more preferably 1:50 to 500. A suitable temperature range is -50 to 200 °C, preferably 60 to 180 °C, more preferably 100 to 160 °C, when the carbene is released to catalyze the ring-opening polymerization of cyclic compounds. The polymerization reaction time can range from 3 seconds to 120 hours, preferably 5 minutes to 10 hours, more preferably 5 minutes to 4 hours.

The above-described initiator may be an alcohol compound, preferably methanol, ethanol, propanol, isopropanol, butanol, tert-butyl alcohol, benzyl alcohol, phenethyl alcohol, ethylene glycol, diethylene glycol, pentaerythritol, more preferably n-butanol, benzyl alcohol, and phenethyl alcohol.

The above-described method of controlled ring-opening polymerization can be carried out in a solvent as well as under solvent-free conditions. The solvent preferably has a boiling point that is higher than the temperature of polymerization.

The invention also provides the use of CO₂ adducts of carbenes in the preparation of catalysts used in ring-opening polymerization of cyclic compounds.

The beneficial effects of the present invention are as follows:
1. Utilizing the nucleophilicity of the *N*-heterocyclic carbene nucleophile and its high catalytic activity in ring-opening polymerization, one can selectively choose to activate certain monomers and then proceed to chain growth, which ensures the living polymerization of cyclic compounds.
2. The CO₂ adducts of carbene can be stored at room temperature using conventional methods. The adducts are stable and can avoid troubles in storing and using carbene.
3. The CO₂ adducts of carbene are heated to activate carbenes and CO₂ is vented from the reaction system. In addition, the CO₂ adducts of carbene are a purely organic catalyst, replacing conventional metallic catalysts, making it possible to have no metallic residue in the polymer product.
4. The decarboxylation temperature of CO₂ adducts of carbene is affected by the substituents on their ring. Therefore, one may choose suitable CO₂ adducts of carbenes as the catalyst based on the desired temperature for the polymerization reaction. In this way, the polymerization process can be better controlled.
5. Using CO₂ adducts of carbene as the catalyst, the ring-opening polymerization of cyclic compounds can be carried out under solvent-free conditions. It realizes cost-saving and simplifies the post-reaction treatment process. In addition, this reaction can be carried out in the reactive extruder to accomplish large-scale preparations of polyester.
6. Carbon dioxide adducts of carbene can be a common catalyst for ring-opening reactions of a variety of cyclic compounds.

### Description of drawings

Examples of this invention are described in detail with reference to the drawings in the following.
Figure 1: A TGA graph of a salt of 1,3-bis(2,6-diisopropyl-phenyl)imidazole-2-carboxylic acid.

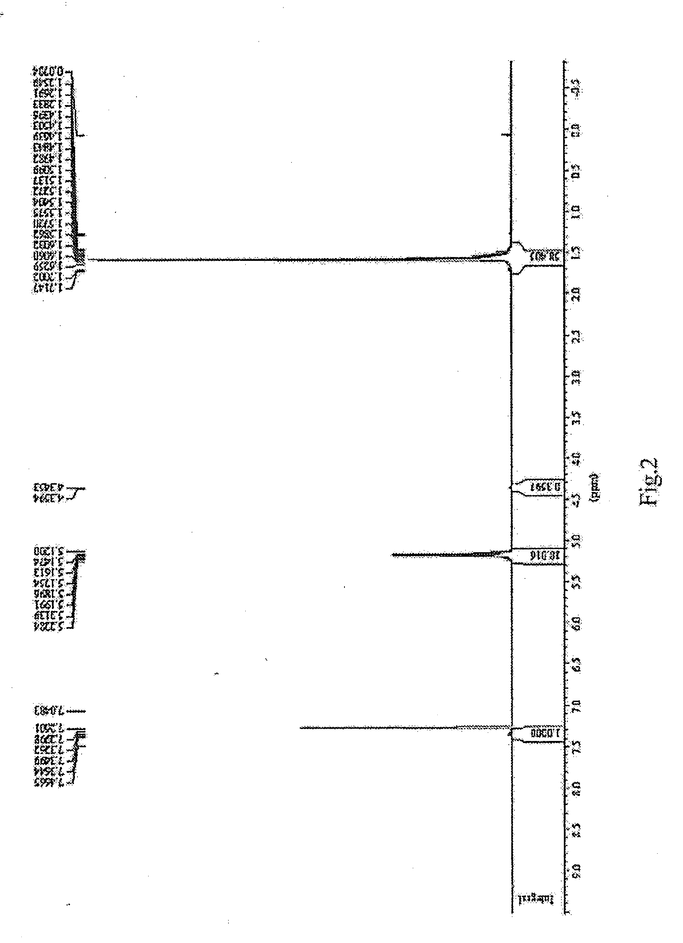

Figure 2: A ¹H-NMR spectrum of polylactic acid prepared using a salt of 1,3-bis(2,6-diisopropyl-phenyl)imidazole-2-carboxylic acid as the catalyst.
Figure 3: A chromatogram of size-exclusion chromatography of polylactic acid prepared using a salt of 1,3-bis(2,6-diisopropyl-phenyl)imidazole-2-carboxylic acid as the catalyst.
Figure 4: A ¹H-NMR spectrum of poly trimethylene carbonate prepared using a salt of 1-butyl-3-methylimidazolium-2-carboxylic acid as the catalyst.

### Examples

The following examples are used to further illustrate the present invention. These examples are for the purpose of illustration and in no way limit the invention. One of ordinary skill in the art would appreciate that these examples do not limit the present invention in any aspects, and that appropriate modification and adjustment of the parameters can be made without violating the essence of this invention and deviation from the scope of the present invention.

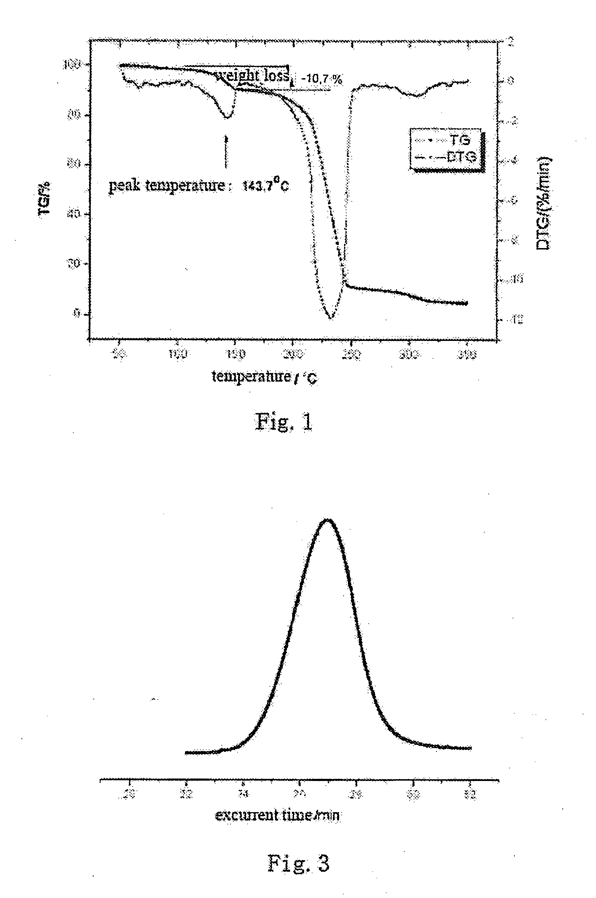

The range of decarboxylation temperature in this invention was obtained using TGA analysis. The equipment and test conditions were: TG/DTA (NETZSCH STA 449 C), N₂ protection, heating rate 5 °C/min, temperature range 50 to 350 °C. Using the salt of 1,3- bis(2,6-diisopropylphenyl)imidazole-2-carboxylic acid as an example, its TG/DTG graph is in Figure 1.

The reaction conversion is measured using ¹H-NMR. The equipment and test conditions were: NMR (Bruker DRX500), solvents were *d-*CHCl₃; *d-*DMSO or *d-*CH₃COCH₃. The average molecular weight of polylactic acid and the dispersion were determined using size-exclusion chromatography (SEC), the test conditions are: column temperature: 25 °C, solvent: THF (HPLC), flow rate: 1 mL/min, HPLC Pump: Waters 515, Detector: RI (Wyatt Optilab rEX), column: HR3, HR4, and HR5 Styragel connected in series, standard sample: polystyrene (PS) *M_{w}* = 900 ~ 1.74 × 10⁶ g/mol, PDI < 1.1.

### Example 1:

1,3-bis(2,6-diisopropyl-phenyl)imidazole-2-carboxylic acid salt (29 mg, 75 µmol), benzyl alcohol (5.4 mg, 50 µmol), ε-caprolactone (1.44 g, 10 mmol) were dissolved in 10 mL of xylene. The solution was heated under the protection of N₂ to 140 °C, and reacted for 3 seconds. Formic acid was added to terminate the reaction. The reaction solution was added into methanol. The precipitate was filtered and dried to a constant weight, obtaining 0.8 gram poly ε-caprolactone. The conversion rate was 72 %. The number average molecular weight *Mₙ* was 19,000. The polydispersity index PDI was 1.06.

The structure of the catalyst and the structure of the cyclic compound are as follows:

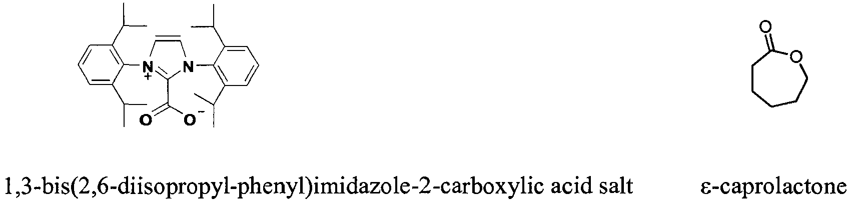

### Example 2:

1,3-bis(2,6-diisopropyl-phenyl)imidazole-2-carboxylic acid salt (108.07 mg, 250 µmol), benzyl alcohol (5.4 mg, 50 µmol), L-lactide (0.72 g, 12.5 mmol) were added into a reaction vessel, heated under the protection of Ar to 130 °C. The reaction in the molten mixture was carried out for 30 minutes. The reaction was terminated by adding water. The reaction mixture was dissolved in chloroform and then added into ethanol. The precipitate was filtered and dried to a constant weight, obtaining 0.6 g of poly L-lactic acid. The conversion was 89 %. The number average molecular weight of the polylactic acid *Mₙ* was 29,000. The polydispersity index PDI was 1.15.

The structure of the catalyst and the structure of the cyclic compound are as follows:

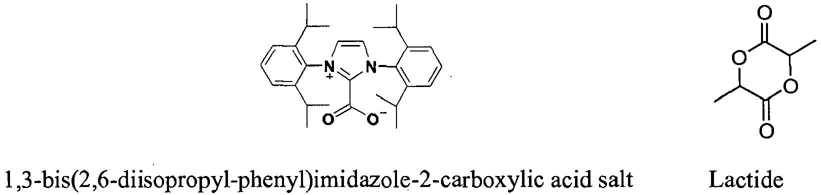

### Example 3:

1-butyl-3-methylimidazolium-2-carboxylic acid salt (18.21 mg, 100 µmol), butanol (7.41 mg, 100 µmol), 3,6-dimethyl-1,4-dioxane-2,5-dione (5.72 g, 40mmol) were added into a reaction vessel. The reaction vessel was under vacuum at a pressure of 7 mmHg. The reaction was carried out at 50 °C for 3 hours. The reaction was terminated by adding hydrochloric acid. The reaction mixture was dissolved with dichloromethane, then added into ethanol. The precipitate was filtered and dried to a constant weight, obtaining 3.6 g of white poly-3,6-dimethyl-1,4-dioxane-2,5-dione. The conversion was 65 %. The number average molecular weight of the polylactic acid *Mₙ* was 36,000. The polydispersity index PDI was 1.34.

The structure of the catalyst and the structure of the cyclic compound are as follows:

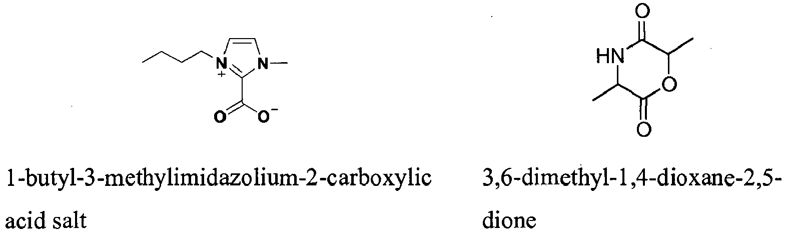

### Example 4:

1,3-bis(2,6-diisopropyl-phenyl)imidazoline-2-carboxylic acid salt (32.6 mg, 75 µmol), methanol (32.0 mg, 1 mmol), δ-valerolactone (0.50 g, 5 mmol) was added into a reaction vessel and dissolved in 30 mL of THF. The solution was heated under the protection of Ar to 60 °C, stirred and let react for 3 days.

The reaction was terminated by adding benzoic acid. The reaction mixture was condensed and added into methanol. The precipitate was filtered and dried to a constant weight to obtain 0.43 g of poly δ-valerolactone. The conversion was 91 %. The number average molecular weight of the polylactic acid *Mₙ* was 500. The polydispersity index was PDI 1.00.

The structure of the catalyst and the structure of the cyclic compound are as follows:

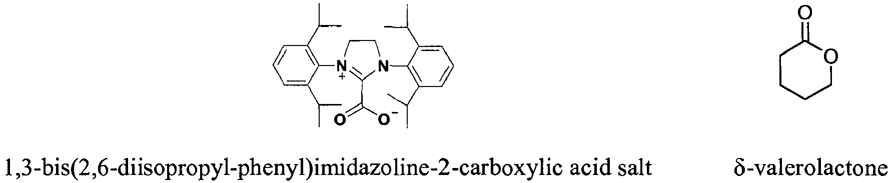

### Example 5:

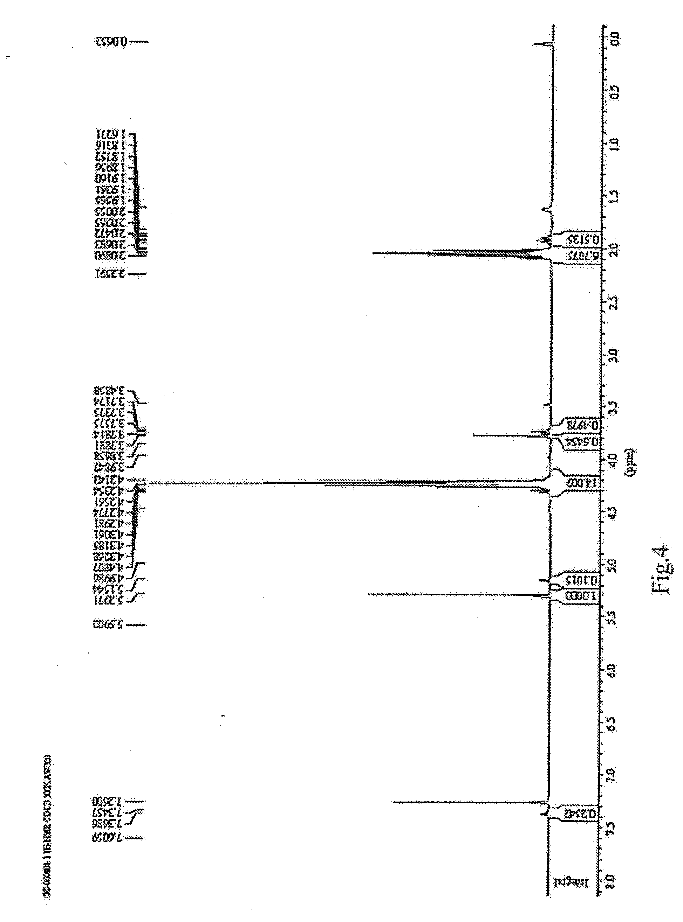

1-butyl-3-methylimidazolium-2-carboxylic acid salt (13.66 mg, 75 µmol), benzyl alcohol (10.8 mg, 100 µmol), trimethylene carbonate (2.04 g, 20 mmol) were added into a reaction vessel. The reaction vessel was under vacuum at a pressure of 7 mmHg. The reaction was carried out at -50 °C for 5 days. The reaction was terminated by adding water. The reaction mixture was dissolved in toluene. The solution was added into ethanol. The precipitate was filtered and dried to a constant weight, obtaining 1.2 g of poly trimethylene carbonate. The conversion was 71 %. The number average molecular weight *Mₙ* was 16,500. The polydispersity index PDI was 1.45. See Figure 4 for a ¹H-NMR spectrum of the obtained poly trimethylene carbonate.

The structure of the catalyst and the structure of the cyclic compound are as follows:

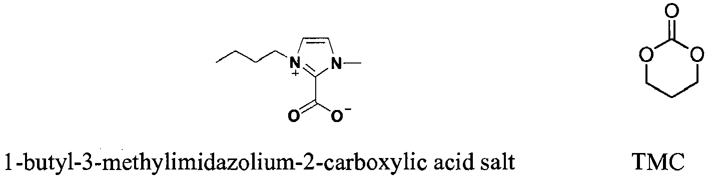

### Example 6:

1,3-dimethyl imidazole-2-carboxylic acid salt (10.5 mg, 75 µmol), ethylene glycol (3.32 mg, 37.5 µmol), trimethylene carbonate (2.04 g, 20 mmol) and ε-caprolactone (1.14 g, 10 mmol) added into a reaction vessel. The mixture was heated under the protection of Ar to 96 °C. The reaction in the molten mixture was carried out for 2 hours. The reaction was terminated by adding CS₂. The reaction mixture was dissolved in chloroform. The solution was then added into methanol. The precipitate was filtered and dried to a constant weight to obtain 2.3 g of a copolymer of trimethylene carbonate and ε-caprolactone. The molar ratio of trimethylene carbonate and ε-caprolactone is 3:1. The number average molecular weight *Mₙ* was 79,500. The polydispersity index PDI was 1.25.

The structure of the catalyst and the structure of the cyclic compound are as follows:

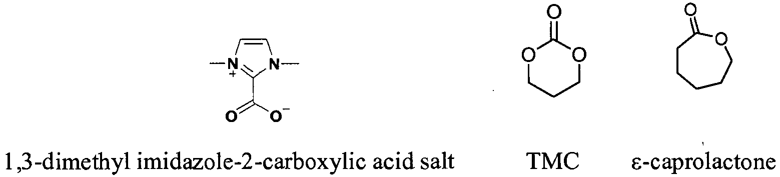

### Example 7:

1,3-bis(2,4,6-trimethyl-phenyl)imidazoline-2-carboxylic acid salt (32.6 mg, 75 µmol), benzene, ethanol (9.16 mg, 75 µmol), D-lactide (1.44 g, 10 mmol) were added into a reaction vessel. The reaction vessel was under vacuum at a pressure of 4 mm Hg. The reaction was carried out at -30 °C for 4 days. The reaction was terminated by adding oxygen. The reaction mixture was dissolved in chloroform and then added into ethanol. The precipitate was filtered and dried to a constant weight to obtain 0.4 g poly D-lactic acid. The conversion was 32 %. The number average molecular weight *Mₙ* was 9,580. The polydispersity index PDI was 1.27.

The structure of the catalyst and the structure of the cyclic compound are as follows:

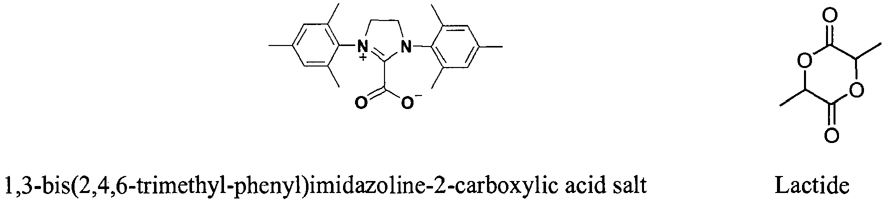

### Example 8:

1,3-bis(2,4,6-trimethyl-phenyl)imidazole-2-carboxylic acid salt (32.6 mg, 75 µmol), isopropanol (9.01 mg, 150 µmol), L-lactide (1.44 g, 10 mmol) and δ-valerolactone (0.50 g, 5 mmol) were dissolved in 5 mL of *N,N*-dimethylformamide. The mixture was heated under the protection of Ar to 96 °C and reacted for 12 hours. The reaction was terminated by adding water. The reaction solution was added into methanol. The precipitate was filtered and dried to a constant weight, obtaining 1.75 g of a copolymer of L-lactide and δ-valerolactone. The molar ratio of L-lactide and δ-valerolactone was 1.6:1. The number average molecular weight *Mₙ* was 9,580. The polydispersity index PDI was 1.27.

The structure of the catalyst and the structure of the cyclic compound are as follows:

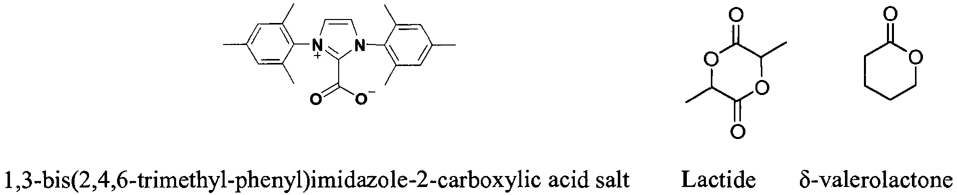

### Example 9:

1,3-bis(o-methylphenyl)imidazole-2-carboxylic acid salt (21.9 mg, 75 µmol), benzyl alcohol (0.81 mg, 7.5 µmol), hexamethyldisiloxane (16.65 g, 75 mmol) were dissolved in 100 mL of tetrahydrofuran. The mixture was heated under the protection of Ar to 50 °C and reacted for 30 hours. The reaction was terminated by adding hydrochloric acid. The reaction solution was condensed and added into methanol. The precipitate was filtered and dried to a constant weight to obtain 0.97 g of poly-hexamethyldisiloxane. The conversion was 69 %. The number average molecular weight of polylactic acid *Mₙ* was 1,220,000. The polydispersity index PDI was 1.47.

The structure of the catalyst and the structure of the cyclic compound are as follows:

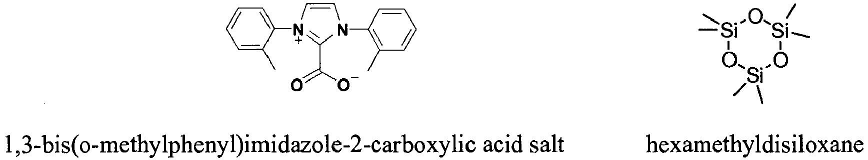

### Example 10:

1,3-bis(2-butyl)imidazole-2-carboxylic acid salt (16.81 mg, 75 µmol), benzyl alcohol (0.54 g, 5 mmol), β-butyrolactone (0.86g, 10mmol) were added into a reaction vessel. The mixture was heated under the protection of Ar to 120 °C. The reaction was carried out in a molten mixture for 2 hours. The reaction was terminated by adding CS₂. The reaction mixture was dissolved in chloroform and the solution was then added into methanol. The precipitate was filtered and dried to a constant weight to obtain 0.78 g of poly β-butyrolactone. The conversion was 99 %. The number average molecular weight *Mₙ* was 172. The polydispersity index PDI was 1.00.

The structure of the catalyst and the structure of the cyclic compound are as follows:

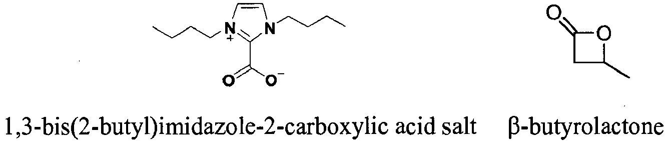

### Example 11:

1,3-bis(methylphenyl)imidazole-2-carboxylic acid salt (21.9 mg, 75 µmol), phenethyl alcohol (12.21 mg, 100 µmol), L-lactide (1.44 g, 10 mmol) were added into a reaction vessel. The mixture was heated under Ar protection to 190 °C. The reaction was carried out in a molten mixture for 30 minutes. The reaction was terminated by adding hydrochloric acid. The reaction mixture was dissolved in chloroform and added into ethanol. The precipitate was filtered and dried to a constant weight to obtain 1.2 g of L-polylactic acid. The conversion was 96 %. The number average molecular weight Mₙ was 8,090. The polydispersity index was PDI 1.15.

The structure of the catalyst and the structure of the cyclic compound are as follows:

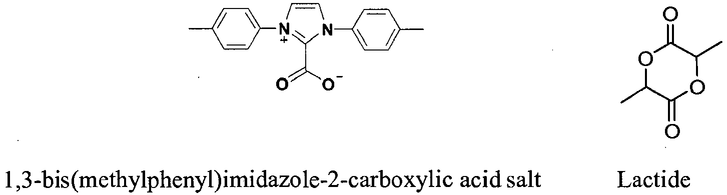

### Example 12:

1,3-dicyclohexyl imidazole-2-carboxylic acid salt (27.62 mg, 100 µmol), tert-butanol (14.81 mg, 200 µmol), D, L-lactide (7.2 g, 50 mmol) were dissolved in 50 mL of toluene. The mixture was heated under the protection of Ar to 100 °C and reacted for 30 minutes. Acetic acid was added to terminate the reaction. The reaction mixture was added into methanol. The precipitate was filtered and dried to a constant weight to obtain poly D, L-lactic acid. The conversion was 97 %. The number average molecular weight *Mₙ* was 25,600. The polydispersity index PDI was 1.09.

The structure of the catalyst and the structure of the cyclic compound are as follows:

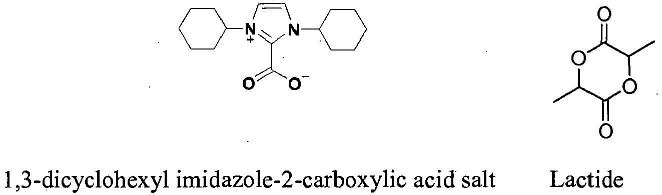

### Example 13:

1-benzyl-3-methyl imidazoline-2-carboxylic acid salt (6.48 mg, 30 µmol), benzyl alcohol (16.21 mg, 150 µmol), trimethylene carbonate (1.02 g, 10 mmol) and L-lactide (1.44g, 12 mmol) were added into reaction vessel. The mixture was heated under the protection of Ar to 200 °C. The reaction was carried out in a molten mixture for 30 minutes. The reaction was terminated by adding oxygen. The reaction mixture was cooled and then dissolved in toluene and then added into ethanol. The precipitate was filtered and dried to a constant weight to obtain 1.9 g of a block copolymer of trimethylene carbonate and L-lactide. The molar ratio of methyl carbonate and L-lactide was 3.4:1. The number average molecular weight *Mₙ* was 7,800. The polydispersity index PDI was 1.23.

The structure of the catalyst and the structure of the cyclic compound are as follows:

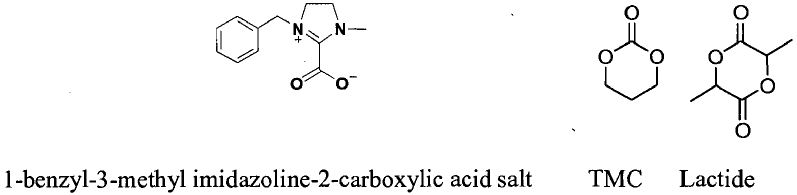

### Example 14:

1,3-dimethyl imidazole-2-carboxylic acid salt (14.01 mg, 100 µmol), propanol (3.00 mg, 50 µmol), octamethyl cyclotetrasiloxane (2.96 g, 10 mmol) were dissolved in 20 mL of DMSO. The mixture was heated under the protection of Ar to 80 °C and reacted for 30 minutes. The reaction was terminated by adding CO₂. The reaction mixture was added into methanol. The precipitate was filtered and dried to a constant weight to obtain 1.6 g of poly octamethyl cyclotetrasiloxane. The conversion was 61 %. The number average molecular weight *Mₙ* was 19,200. The polydispersity index PDI was 1.24.

The structure of the catalyst and the structure of the cyclic compound are as follows:

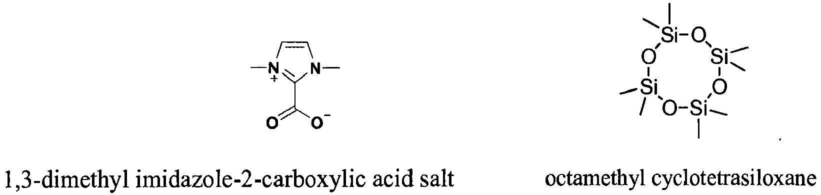

### Example 15:

1-phenylethyl-3-methylimidazolium-2-carboxylic acid salt (13.81 mg, 60 µmol), benzyl alcohol (6.48 mg, 60 µmol), and lactide oligomers having a molecular weight of 2000 (24.0 g, 12 mmol) were added into a reaction vessel. The mixture was heated under the protection of Ar to 130 °C. The reaction was carried out in a molten mixture for 6 hours. Oxygen was added to terminate the reaction. The reaction mixture was cooled and then dissolved in toluene. The solution was added into ethanol. The precipitate was filtered and dried to a constant weight to obtain 18.0 g of polylactic acid. The conversion was 94 %. The number average molecular weight was *Mₙ* 320,000. The polydispensity index PDI was 1.68.

The structure of the catalyst is as follows:

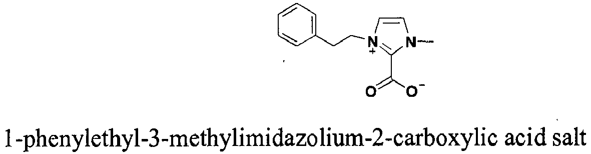

### Example 16:

1,3-Dicyclohexyl imidazole-2-carboxylic acid salt (27.62 mg, 100 µmol), tert-butanol (0.81 mg, 11 mmol), lactide oligomers having a molecular weight of 2000 (24.0 g, 12 mmol), and β-butyrolactone (0.86g, 10 mmol) were dissolved in 50 mL of toluene. The mixture was heated under the protection of Ar to 100 °C and reacted for 4 hours. Acetic acid was added to terminate the reaction. The reaction mixture was added into methanol. The precipitate was filtered and dried to a constant weight to obtain 21.9 g of a block copolymer of lactide and β-butyrolactone. The molar ratio of lactide and β-butyrolactone was 25:1. The number average molecular weight *Mₙ* was 2,076. The polydispersity index PDI was 1.07.

The structure of the catalyst and the structure of the cyclic compound are as follows:

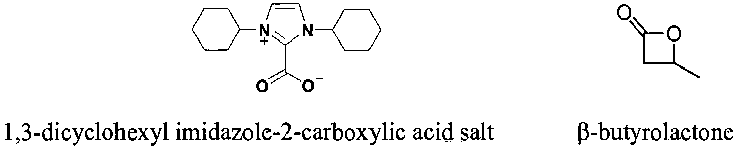

### Example 17:

1,3-bis(methylphenyl)imidazoline-2-carboxylic acid salt (21.9 mg, 75 µmol), phenethyl alcohol (12.21 mg, 100 µmol), and ε-caprolactam (1.14 g, 10 mmol) were added into a reaction vessel. The reaction mixture was heated under the protection of Ar to 200 °C. The reaction was carried out in a molten mixture for 30 minutes. Hydrochloric acid was added to terminate reaction. The reaction mixture was dissolved in chloroform and then added into ethanol. The precipitate was filtered and dried to a constant weight to obtain 0.78 g of poly ε-caprolactam. The conversion was 91 %. The number average molecular weight *Mₙ* was 8,700. The polydispersity index PDI was 1.39.

The structure of the catalyst and the structure of the cyclic compound are as follows:

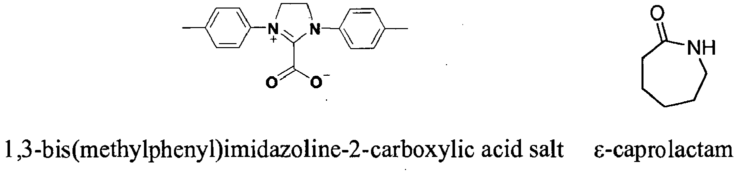

### Example 18:

1,3-bis(o-methylphenyl) imidazoline-2-carboxylic acid salt (21.9 mg, 75 µmol), ethanol (1.73 mg, 37.5 µmol), hexamethyldisiloxane (2.22g, 10 mmol) and ε-caprolactam (1.14g, 10 mmol) were dissolved in 100 mL of tetrahydrofuran. The mixture was heated under the protection of Ar to 50 °C and reacted for 72 hours. Hydrochloric acid was added to terminate the reaction. The reaction mixture was concentrated and added into methanol. The precipitate was filtered and dried to a constant weight to obtain 2.76 g of a copolymer of hexamethyldisiloxane and ε-caprolactam. The molar ratio of hexamethyldisiloxane and ε-caprolactam was 1:5. The number average molecular weight *Mₙ* was 40,900. The polydispersity index PDI was 1.45.

The structure of the catalyst and the structure of the cyclic compound are as follows:

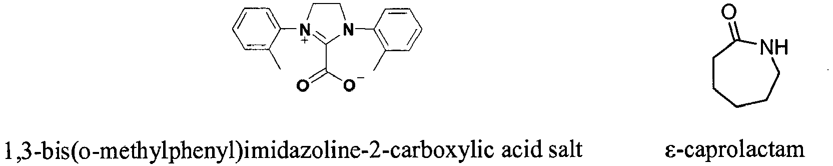

### Example 19:

1-ethyl-3-methylimidazolium-2-carboxylic acid salt (30.81 mg, 200 µmol), benzyl alcohol (5.4 mg, 50 µmol), ε-caprolactam (1.14 g, 10 mmol) were added into a reaction vessel. The mixture was heated under the protection of Ar to 130 °C and the reaction was carried out in a molten mixture for 2 hours. Water was added to terminate the reaction. The reaction mixture was dissolved in chloroform and then added into ethanol. The precipitate was filtered and dried to a constant weight to obtain 1.08 g of poly ε-caprolactam. The conversion was 96 %. The number average molecular weight *Mₙ* was 17,700. The polydispersity index PDI was 1.17.

The structure of the catalyst and the structure of the cyclic compound are as follows:

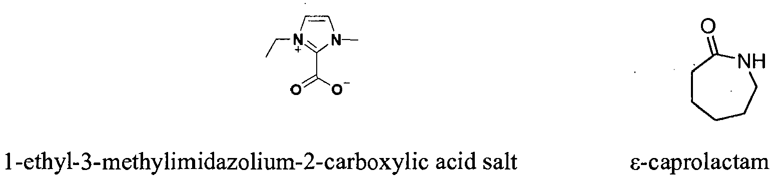

### Example 20:

1,3-bis(2,4,6-trimethyl-phenyl)imidazole-2-carboxylic acid salt (32.6 mg, 75 µmol), isopropanol (9.01 mg, 150 µmol), 1,3,5-trioxepane (1.04 g, 10 mmol), and δ-valerolactone (0.50 g, 5 mmol) were dissolved in 5 mL of *N,N*-dimethylformamide. The mixture was heated under the protection of Ar to 96 °C and reacted for 12 hours. Water was added to terminate the reaction. The reaction mixture was added into methanol. The precipitate was filtered and dried to a constant weight to obtain 0.8 g of a copolymer of 1,3,5-trioxepane and δ-valerolactone. The molar ratio between 1,3,5-trioxepane and δ-valerolactone in the product was 1:1.5. The number average molecular weight *Mₙ* was 7,600. The polydispersity index PDI was 1.26.

The structure of the catalyst and the structure of the cyclic compound are as follows:

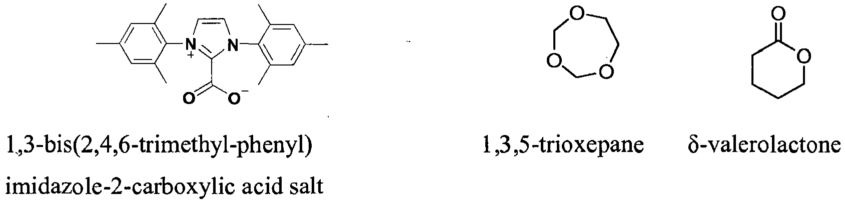

### Example 21:

1,3-bis(2,4,6-trimethyl-phenyl)imidazole-2-carboxylic acid salt (32.6 mg, 75 µmol) and 1,3,5-trioxepane (0.39 g, 3.75 mmol) were dissolved in 5 mL of *N,N*-dimethylformamide. The mixture was heated under the protection of Ar to 120 °C and reacted for 30 hours. Water was added to terminate the reaction. The reaction mixture was added into methanol. The precipitate was filtered and dried to a constant weight to obtain 0.2 g of poly 1,3,5-trioxepane. The conversion was 88 %. The number average molecular weight *Mₙ* was 3,750. The polydispersity index PDI was 1.69.

The structure of the catalyst and the structure of the cyclic compound are as follows:

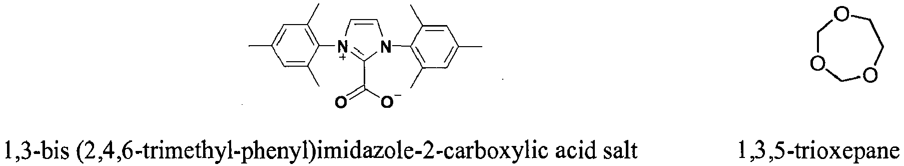

### Example 22:

1-tert-butyl-4,5-dichloro-thiazolidine-2-carboxylic acid salt (19.05 mg, 75 µmol), phenethyl alcohol (12.21 mg, 100 µmol), L-lactide (1.44 g, 10 mmol) were added into a reaction vessel. The mixture was heated under the protection of Ar to 190 °C. The reaction was carried out in a molten mixture for 30 minutes. Reaction was terminated by adding dilute hydrochloric acid. The reaction mixture was dissolved in chloroform and then added into ethanol. The precipitate was filtered and dried to a constant weight to obtain 1.2 g poly L-lactic acid. The conversion was 90 %. The number average molecular weight *Mₙ* was 8,090. The polydispersity index PDI of 1.15.

The structure of the catalyst and the structure of the cyclic compound are as follows:

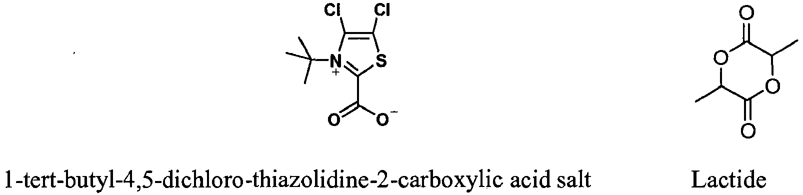

### Example 23:

1-(1-phenylethyl)thiazole-2-carboxylic acid salt (17.5 mg, 75 µmol), ethanol (1.73 mg, 37.5 µmol), hexamethyldisiloxane (2.22 g, 10 mmol) and ε-caprolactam (1.14 g, 10 mmol) were dissolved in 100 mL of tetrahydrofuran. The mixture was heated under the protection of Ar to 50 °C and reacted for 72 hours. The reaction was terminated by adding dilute hydrochloric acid. The reaction mixture was condensed and then added into methanol. The precipitate was filtered and dried to a constant weight to obtain 2.76 g poly L-lactic acid. The conversion was 90 %. The number average molecular weight *Mₙ* was 40,900. The polydispersity index PDI of 1.15.

The structure of the catalyst and the structure of the cyclic compound are as follows:

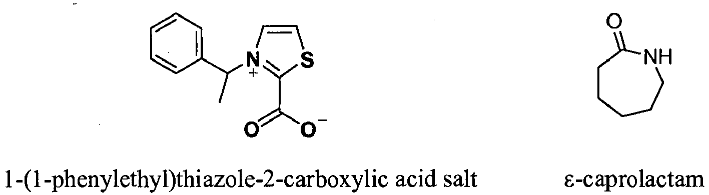

### Example 24

2,4,5-phenyl-1,2,4-triazole-3-carboxylic acid salt (34.14 mg, 100 µmol), tert-butanol (0.81 mg, 1 mmol), a lactide oligomer having a molecular weight of 2000 (24.0 g, 12 mmol), and β-butyrolactone (0.86 g, 10 mmol) were dissolved in 50 mL of toluene. The mixture was heated under the protection of Ar to 100 °C and reacted for 4 hours. The reaction was terminated by adding acetic acid. The reaction mixture was added into methanol. The precipitate was filtered and dried to a constant weight to obtain 21.9 g of a block copolymer of lactide and β-butyrolactone. The molar ratio of lactide and β-butyrolactone was 25:1. The number average molecular weight *Mn* was 2,076. The polydispersity index PDI was 1.07.

The structure of the catalyst and the structure of the cyclic compound are as follows:

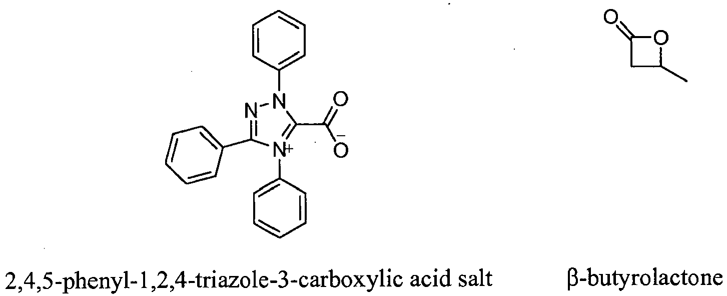

## Claims

1. A method of controlled ring-opening polymerization reaction of cyclic compounds catalyzed by a carbon dioxide adduct of carbene, wherein the carbon dioxide adduct of carbene has a structure represented by formula (I) 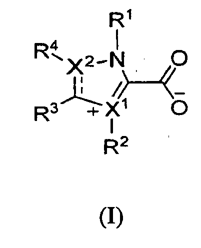 wherein the dotted line together with the solid line parallel to the dotted line represents a single bond or a double bond;
X¹ is chosen from S and N;
X² is chosen from C and N;
R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a substituted phenyl group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group; and
alternatively, R³ and R⁴ are connected to form cycloalkyl or cycloalkenyl rings having 3 to 8 carbon atoms; or
R³ and R⁴ are connected to form a benzene ring; or
R² and R³ are connected to form 5-membered or 6-membered *N*-heterocyclic rings having no substituent.

2. The method of claim 1, wherein the carbon dioxide adduct of carbene has a structure represented by formula (II) 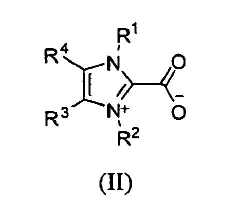 wherein R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a substituted phenyl group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group; and
alternatively, R³ and R⁴ are connected to form cycloalkyl or cycloalkenyl rings having 3 to 8 carbon atoms; or
R³ and R⁴ are connected to form a benzene ring.

3. The method of claim 1, wherein the carbon dioxide adduct of carbene has a structure represented by formula (III) 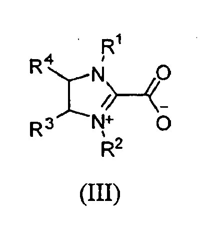 wherein R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a substituted phenyl group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group; and
alternatively, R³ and R⁴ are connected to form cycloalkyl or cycloalkenyl rings having 3 to 8 carbon atoms.

4. The method of claim 1, wherein the carbon dioxide adduct of carbene has a structure represented by formula (IV) 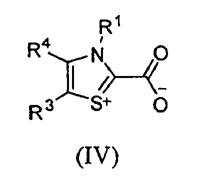 wherein R¹ is chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a substituted phenyl group;
R³ and R⁴ can be the same or different and are chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group; and
alternatively, R³ and R⁴ are connected to form cycloalkyl or cycloalkenyl rings having 3 to 8 carbon atoms; or
R³ and R⁴ are connected to form a benzene ring.

5. The method of claim 1, wherein the carbon dioxide adduct of carbene has a structure represented by formula (V) 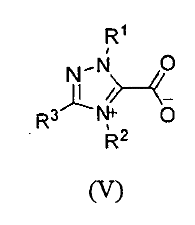 wherein R¹ and R² can be the same or different and are chosen from
hydrogen,
alkyl groups having 1 to 10 carbon atoms,
alkyl groups having 1 to 10 carbon atoms and also having one or more substituents chosen from a halogen atom, a hydroxyl group, a phenyl group, and a cyano group,
cycloalkyl groups having 3 to 6 carbon atoms,
a halogen atom,
an adamantyl group,
a phenyl group, and
a substituted phenyl group;
R³ is chosen from
hydrogen,
a halogen atom,
a cyano group,
a hydroxyl group,
alkyl groups having 1 to 4 carbon atoms,
alkyl groups having 1 to 4 carbon atoms and also having one or more substituents chosen from a halogen atom, a hydroxyl group, a phenyl group, and a cyano group,
a phenyl group, and
a substituted phenyl group; and
R² and R³ are connected to form 5-membered or 6-membered N- heterocyclic rings having no substituent.

6. The method of any one of claims 1 to 5, wherein the substituted phenyl group has one, two, or three substituents, wherein the substituents can be the same or different, chosen from a halogen atom, a hydroxyl group, an alkoxy group, and a cyano group, alkyl groups having 1-5 carbon atoms, and alkyl groups having 1-5 carbon atoms and having one or more substituents chosen from halogen atoms, a hydroxyl group, a phenyl group, and a cyano group.

7. The method of any one of claims 1 to 6, **characterized in that** the cyclic compound is chosen from one or more of the following 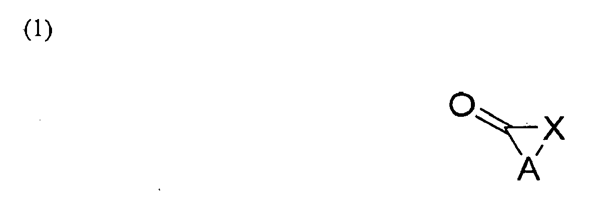 wherein A is [-(CR¹R²)-]ₙ, n is an integer from 2 to 10; R¹ and R² are the same or different and are selected from H, alkyl groups with 1 to 5 carbon atoms, and alkyl groups with 1 to 5 carbon atoms with substituents chosen from halogen atoms or a hydroxyl group, and X is chosen from O and N; 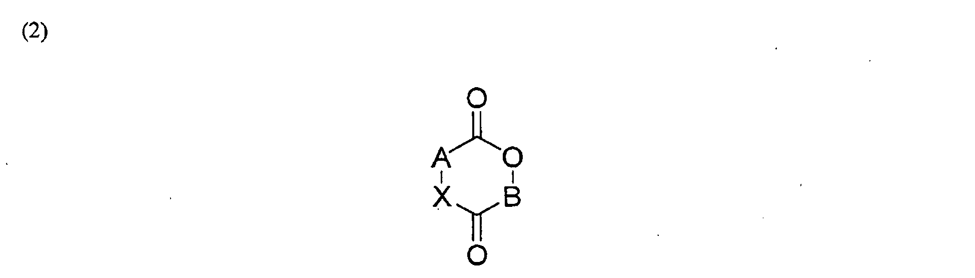 wherein A and B are [-(CR¹R²)-]ₙ, n is an integer from 2 to 10, A and B can be the same or different, R¹ and R² are the same or different and are selected from H, alkyl groups with 1 to 5 carbon atoms, and alkyl groups with 1 to 5 carbon atoms with substituents chosen from halogen atoms or a hydroxyl group, and X is chosen from O and NH; 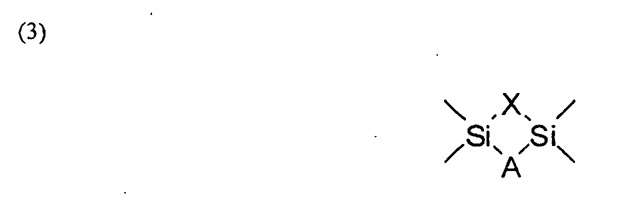 or cyclic compounds having 2 to 5 structure units 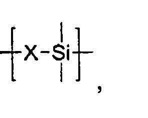 wherein A is [-(CR¹R²)-]ₙ, n is an integer from 2 to 10; R¹ and R² are the same or different and are selected from H, alkyl groups with 1 to 5 carbon atoms, and alkyl groups with 1 to 5 carbon atoms with substituents chosen from halogen atoms or a hydroxyl group, and X is chosen from O, N and S; 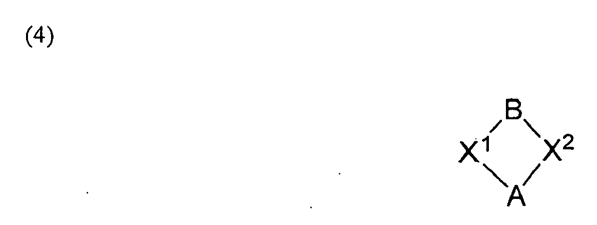 wherein A is [-(CR¹R²)-]ₙ, n is an integer from 2 to 10; R¹ and R² are the same or different and are selected from H, alkyl groups with 1 to 5 carbon atoms, and alkyl groups with 1 to 5 carbon atoms with substituents chosen from halogen atoms or a hydroxyl group; B is chosen from CH₂-O-CH₂, CH₂, and C=O, and X¹ and X² are the same or different and are chosen from O, N, S, and Si.

8. The method of any one of claims 1 to 7, wherein the cyclic compound is a macrocylic oligomer obtained by pre-polymerization of one or more cyclic monomers described in claim 7, and the macrocyclic oligomer contains 3 to 20 monomers.

9. The method of any one of claims 1 to 8, wherein the molar ratio of the carbon dioxide adduct of carbene and the cyclic compound is 1:50 to 1000.

10. The method of claim 9, wherein the molar ratio of the carbon dioxide adduct of carbene and the cyclic compound is 1:50 to 800.

11. The method of any one of claims 1 to 10, wherein an initiator is used in the polymerization, wherein the molar ratio of the initiator and the cyclic compound is 1:2 to 10000.

12. The method of any one of claims 1 to 11, wherein the range of controlled temperature in the polymerization when the carbene is released to catalyze the ring-opening polymerization of the cyclic compound ranges from -50 °C to 200 °C.

13. The method of claim 12, wherein the temperature ranges from 60 °C to 180 °C.

14. The method of claim 11, wherein the initiator is an alcohol selected from methanol, ethanol, propanol, isopropanol, butanol, tert-butyl alcohol, benzyl alcohol, phenethyl alcohol, ethylene glycol, diethylene glycol, pentaerythritol.

## Patentansprüche

1. Verfahren zur kontrollierten Ringöffnungspolymerisationsreaktion von cyclischen Verbindungen, die durch ein Kohlendioxidaddukt eines Carbens katalysiert wird, wobei das Kohlendioxidaddukt eines Carbens eine Struktur aufweist, die durch die Formel (I) dargestellt ist 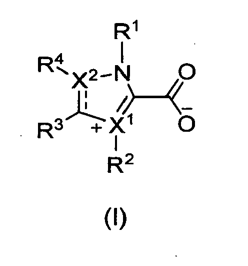 wobei die gestrichelte Linie zusammen mit der durchgezogenen Linie parallel zur gestrichelten Linie eine Einfachbindung oder eine Doppelbindung darstellt,
X¹ aus S und N ausgewählt ist,
X² aus C und N ausgewählt ist,
R¹ und R² gleich oder verschieden sein können und aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer substituierten Phenylgruppe ausgewählt sind,
R³ und R⁴ gleich oder verschieden sein können und aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe ausgewählt sind, und
alternativ R³ und R⁴ verbunden sind und Cycloalkyl- oder Cycloalkenylringe mit 3 bis 8 Kohlenstoffatomen bilden oder
R³ und R⁴ verbunden sind und einen Benzolring bilden oder
R² und R³ verbunden sind und 5-gliedrige oder 6-gliedrige N-heterocylische Ringe bilden, die keinen Substituenten aufweisen.

2. Verfahren nach Anspruch 1, bei dem das Kohlendioxidaddukt eines Carbens eine Struktur aufweist, die durch die Formel (II) dargestellt ist 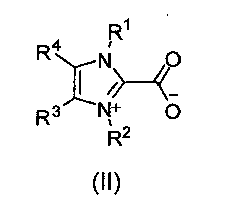 worin R¹ und R² gleich oder verschieden sein können und aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer substituierten Phenylgruppe ausgewählt sind,
R³ und R⁴ gleich oder verschieden sein können und aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe ausgewählt sind, und
alternativ R³ und R⁴ verbunden sind und Cycloalkyl- oder Cycloalkenylringe mit 3 bis 8 Kohlenstoffatomen bilden oder
R³ und R⁴ verbunden sind und einen Benzolring bilden.

3. Verfahren nach Anspruch 1, bei dem das Kohlendioxidaddukt eines Carbens eine Struktur aufweist, die durch die Formel (III) dargestellt ist 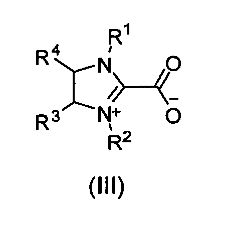 worin R¹ und R² gleich oder verschieden sein können und aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer substituierten Phenylgruppe ausgewählt sind,
R³ und R⁴ gleich oder verschieden sein können und aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe ausgewählt sind, und
alternativ R³ und R⁴ verbunden sind und Cycloalkyl- oder Cycloalkenylringe mit 3 bis 8 Kohlenstoffatomen bilden.

4. Verfahren nach Anspruch 1, bei dem das Kohlendioxidaddukt eines Carbens eine Struktur aufweist, die durch die Formel (IV) dargestellt ist 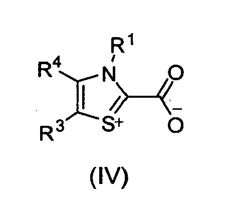 worin R¹ aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer substituierten Phenylgruppe ausgewählt ist,
R³ und R⁴ gleich oder verschieden sein können und aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe ausgewählt sind, und
alternativ R³ und R⁴ verbunden sind und Cycloalkyl- oder Cycloalkenylringe mit 3 bis 8 Kohlenstoffatomen bilden oder
R³ und R⁴ verbunden sind und einen Benzolring bilden.

5. Verfahren nach Anspruch 1, bei dem das Kohlendioxidaddukt eines Carbens eine Struktur aufweist, die durch die Formel (V) dargestellt ist 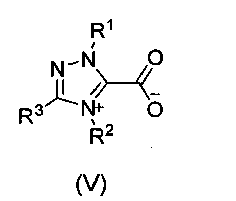 worin R¹ und R² gleich oder verschieden sein können und aus
Wasserstoff,
Alkylgruppen mit 1 bis 10 Kohlenstoffatomen,
Alkylgruppen mit 1 bis 10 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
Cycloalkylgruppen mit 3 bis 6 Kohlenstoffatomen,
einem Halogenatom,
einer Adamantylgruppe,
einer Phenylgruppe und
einer substituierten Phenylgruppe ausgewählt sind,
R³ aus
Wasserstoff,
einem Halogenatom,
einer Cyanogruppe,
einer Hydroxylgruppe,
Alkylgruppen mit 1 bis 4 Kohlenstoffatomen,
Alkylgruppen mit 1 bis 4 Kohlenstoffatomen, die auch einen oder mehrere Substituenten aufweisen, der oder die aus einem Halogenatom, einer Hydroxylgruppe, einer Phenylgruppe und einer Cyanogruppe ausgewählt ist oder sind,
einer Phenylgruppe und
einer substituierten Phenylgruppe ausgewählt ist, und
R² und R³ verbunden sind und 5-gliedrige oder 6-gliedrige N-heterocylische Ringe bilden, die keinen Substituenten aufweisen.

6. Verfahren nach einem der Ansprüche 1 bis 5, bei dem die substituierte Phenylgruppe einen, zwei oder drei Substituenten aufweist, wobei die Substituenten gleich oder verschieden sein können und aus einem Halogenatom, einer Hydroxylgruppe, einer Alkoxygruppe und einer Cyanogruppe, Alkylgruppen mit 1 bis 5 Kohlenstoffatomen und Alkylgruppen mit 1 bis 5 Kohlenstoffatomen, die einen oder mehrere Substituenten aufweisen, der oder die aus Halogenatomen, einer Hydroxylgruppe, einer Phenylgruppe und einer Cyanogruppe ausgewählt ist oder sind, ausgewählt sind.

7. Verfahren nach einem der Ansprüche 1 bis 6, **dadurch gekennzeichnet, dass** die cyclische Verbindung ausgewählt ist aus einer oder mehreren der Folgenden 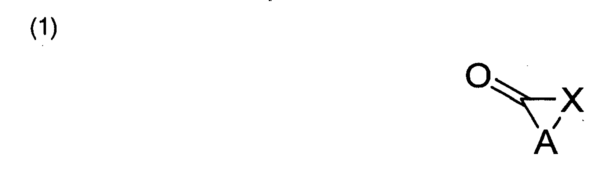 worin A [-(CR¹R²)-]ₙ ist, n eine ganze Zahl von 2 bis 10 ist, R¹ und R² gleich oder verschieden sind und aus H, Alkylgruppen mit 1 bis 5 Kohlenstoffatomen und Alkylgruppen mit 1 bis 5 Kohlenstoffatomen mit Substituenten ausgewählt sind, die aus Halogenatomen oder einer Hydroxylgruppe ausgewählt sind, und X aus O und N ausgewählt ist, 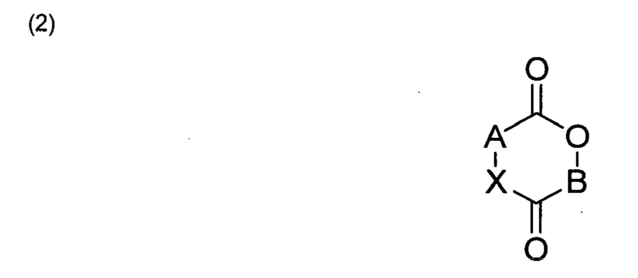 worin A und B [-(CR¹R²)-]ₙ sind, n eine ganze Zahl von 2 bis 10 ist, A und B gleich oder verschieden sein können, R¹ und R² gleich oder verschieden sind und aus H, Alkylgruppen mit 1 bis 5 Kohlenstoffatomen und Alkylgruppen mit 1 bis 5 Kohlenstoffatomen mit Substituenten ausgewählt sind, die aus Halogenatomen oder einer Hydroxylgruppe ausgewählt sind, und X aus O und NH ausgewählt ist, 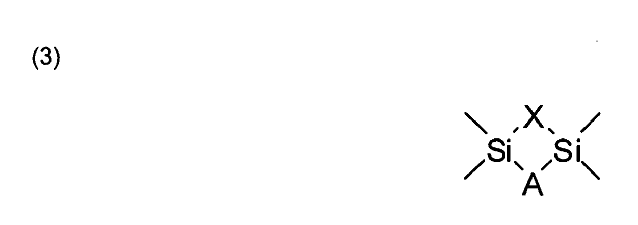 oder cyclischen Verbindungen mit 2 bis 5 Struktureinheiten 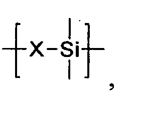 worin A [-(CR¹R²)-]ₙ ist, n eine ganze Zahl von 2 bis 10 ist, R¹ und R² gleich oder verschieden sind und aus H, Alkylgruppen mit 1 bis 5 Kohlenstoffatomen und Alkylgruppen mit 1 bis 5 Kohlenstoffatomen mit Substituenten ausgewählt sind, die aus Halogenatomen oder einer Hydroxylgruppe ausgewählt sind, und X aus O, N und S ausgewählt ist, 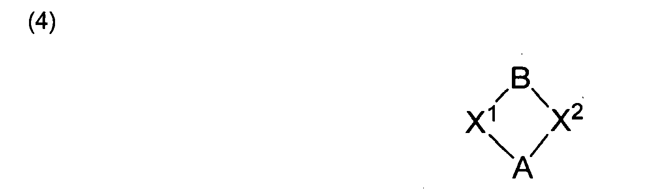 worin A [-(CR¹R²)-]ₙ ist, n eine ganze Zahl von 2 bis 10 ist, R¹ und R² gleich oder verschieden sind und aus H, Alkylgruppen mit 1 bis 5 Kohlenstoffatomen und Alkylgruppen mit 1 bis 5 Kohlenstoffatomen mit Substituenten ausgewählt sind, die aus Halogenatomen oder einer Hydroxylgruppe ausgewählt sind, B aus CH₂-O-CH₂, CH₂ und C=O ausgewählt ist, und X¹ und X² gleich oder verschieden sind und aus O, N, S und Si ausgewählt sind.

8. Verfahren nach einem der Ansprüche 1 bis 7, bei dem die cyclische Verbindung ein makrocyclisches Oligomer ist, das durch eine Vorpolymerisation eines cyclischen Monomers oder mehrerer cyclischer Monomere erhalten wird, das oder die im Anspruch 7 beschrieben ist oder sind, und das makrocyclische Oligomer 3 bis 20 Monomere enthält.

9. Verfahren nach einem der Ansprüche 1 bis 8, bei dem das Molverhältnis des Kohlendioxidaddukts eines Carbens und der cyclischen Verbindung 1:50 bis 1000 ist.

10. Verfahren nach Anspruch 9, bei dem das Molverhältnis des Kohlendioxidaddukts eines Carbens und der cyclischen Verbindung 1:50 bis 800 ist.

11. Verfahren nach einem der Ansprüche 1 bis 10, bei dem ein Initiator in der Polymerisation verwendet wird, wobei das Molverhältnis des Initiators und der cyclischen Verbindung 1:2 bis 10000 beträgt.

12. Verfahren nach einem der Ansprüche 1 bis 11, bei dem der Bereich der kontrollierten Temperatur in der Polymerisation, wenn das Carben zur Katalyse der Ringöffnungspolymerisation der cyclischen Verbindung freigesetzt wird, im Bereich von -50 °C bis 200 °C liegt.

13. Verfahren nach Anspruch 12, bei dem die Temperatur im Bereich von 60 °C bis 180 °C liegt.

14. Verfahren nach Anspruch 11, bei dem der Initiator ein Alkohol ist, der aus Methanol, Ethanol, Propanol, Isopropanol, Butanol, tert-Butylalkohol, Benzylalkohol, Phenethylalkohol, Ethylenglykol, Diethylenglykol, Pentaerythrit ausgewählt ist.

## Revendications

1. Procédé de réaction de polymérisation par décyclisation contrôlée de composés cycliques catalysée par un adduit de dioxyde de carbone et de carbène, dans lequel l'adduit de dioxyde de carbone et de carbène a une structure représentée par la formule (I) : 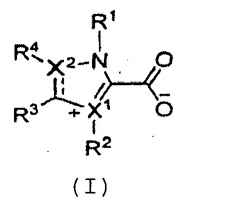 dans laquelle la ligne de tirets, avec la ligne continue parallèle à la ligne de tirets, représente une liaison simple ou une double liaison ;
X¹ est choisi parmi S et N ;
X² est choisi parmi C et N ;
R¹ et R² peuvent être identiques ou différents et sont choisis parmi
l'hydrogène,
les groupes alkyle ayant 1 à 10 atomes de carbone,
les groupes alkyle ayant 1 à 10 atomes de carbone et portant aussi un ou plusieurs substituants choisis parmi un atome d'halogène, un groupe hydroxyle, un groupe phényle, et un groupe cyano,
les groupes cycloalkyle ayant 3 à 6 atomes de carbone,
un atome d'halogène,
un groupe adamantyle,
un groupe phényle, et
un groupe phényle substitué :
R³ et R⁴ peuvent être identiques ou différents et sont choisis parmi
l'hydrogène,
un atome d'halogène,
un groupe cyano,
un groupe hydroxyle,
les groupes alkyle ayant 1 à 4 atomes de carbone,
les groupes alkyle ayant 1 à 4 atomes de carbone et portant aussi un ou plusieurs substituants choisis parmi un atome d'halogène, un groupe hydroxyle, un groupe phényle, et un groupe cyano,
un groupe phényle, et
un groupe phényle substitué ; et
en variante, R³ et R⁴ sont raccordés pour former un cycle cycloalkyle ou cycloalcényle ayant 3 à 8 atomes de carbone ; ou
R³ et R⁴ sont raccordés pour former un cycle benzène ; ou R² et R³ sont raccordés pour former un cycle N-hétérocyclique à 5 ou 6 chaînons ne portant pas de substituant.

2. Procédé selon la revendication 1, dans lequel l'adduit de dioxyde de carbone et de carbène a une structure représentée par la formule (II) 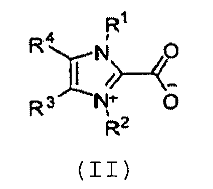 dans laquelle
R¹ et R² peuvent être identiques ou différents et sont choisis parmi
l'hydrogène,
les groupes alkyle ayant 1 à 10 atomes de carbone,
les groupes alkyle ayant 1 à 10 atomes de carbone et portant aussi un ou plusieurs substituants choisis parmi un atome d'halogène, un groupe hydroxyle, un groupe phényle, et un groupe cyano,
les groupes cycloalkyle ayant 3 à 6 atomes de carbone,
un atome d'halogène,
un groupe adamantyle,
un groupe phényle, et
un groupe phényle substitué ;
R³ et R⁴ peuvent être identiques ou différents et sont choisis parmi
l'hydrogène,
un atome d'halogène,
un groupe cyano,
un groupe hydroxyle,
les groupes alkyle ayant 1 à 4 atomes de carbone,
les groupes alkyle ayant 1 à 4 atomes de carbone et portant aussi un ou plusieurs substituants choisis parmi un atome d'halogène, un groupe hydroxyle, un groupe phényle, et un groupe cyano,
un groupe phényle, et
un groupe phényle substitué ; et
en variante, R³ et R⁴ sont raccordés pour former un cycle cycloalkyle ou cycloalcényle ayant 3 à 8 atomes de carbone ; ou
R³ et R⁴ sont raccordés pour former un cycle benzène.

3. Procédé selon la revendication 1, dans lequel l'adduit de dioxyde de carbone et de carbène a une structure représentée par la formule (III) 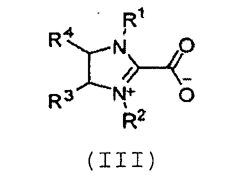 dans laquelle
R¹ et R² peuvent être identiques ou différents et sont choisis parmi
l'hydrogène,
les groupes alkyle ayant 1 à 10 atomes de carbone,
les groupes alkyle ayant 1 à 10 atomes de carbone et portant aussi un ou plusieurs substituants choisis parmi un atome d'halogène, un groupe hydroxyle, un groupe phényle, et un groupe cyano,
les groupes cycloalkyle ayant 3 à 6 atomes de carbone,
un atome d'halogène,
un groupe adamantyle,
un groupe phényle, et
un groupe phényle substitué ;
R³ et R⁴ peuvent être identiques ou différents et sont choisis parmi
l'hydrogène,
un atome d'halogène,
un groupe cyano,
un groupe hydroxyle,
les groupes alkyle ayant 1 à 4 atomes de carbone,
les groupes alkyle ayant 1 à 4 atomes de carbone et portant aussi un ou plusieurs substituants choisis parmi un atome d'halogène, un groupe hydroxyle, un groupe phényle, et un groupe cyano,
un groupe phényle, et
un groupe phényle substitué ; et
en variante, R³ et R⁴ sont raccordés pour former un cycle cycloalkyle ou cycloalcényle ayant 3 à 8 atomes de carbone.

4. Procédé selon la revendication 1, dans lequel l'adduit de dioxyde de carbone et de carbène a une structure représentée par la formule (IV) 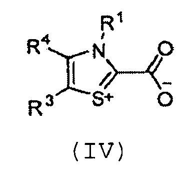 dans laquelle
R¹ est choisi parmi
l'hydrogène,
les groupes alkyle ayant 1 à 10 atomes de carbone,
les groupes alkyle ayant 1 à 10 atomes de carbone et portant aussi un ou plusieurs substituants choisis parmi un atome d'halogène, un groupe hydroxyle, un groupe phényle, et un groupe cyano,
les groupes cycloalkyle ayant 3 à 6 atomes de carbone,
un atome d'halogène,
un groupe adamantyle,
un groupe phényle, et
un groupe phényle substitué ;
R³ et R⁴ peuvent être identiques ou différents et sont choisis parmi
l'hydrogène,
un atome d'halogène,
un groupe cyano,
un groupe hydroxyle,
les groupes alkyle ayant 1 à 4 atomes de carbone,
les groupes alkyle ayant 1 à 4 atomes de carbone et portant aussi un ou plusieurs substituants choisis parmi un atome d'halogène, un groupe hydroxyle, un groupe phényle, et un groupe cyano,
un groupe phényle, et
un groupe phényle substitué ; et
en variante, R³ et R⁴ sont raccordés pour former un cycle cycloalkyle ou cycloalcényle ayant 3 à 8 atomes de carbone ; ou
R³ et R⁴ sont raccordés pour former un cycle benzène.

5. Procédé selon la revendication 1, dans lequel l'adduit de dioxyde de carbone et de carbène a une structure représentée par la formule (V) 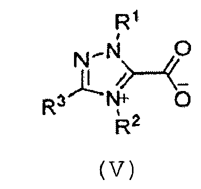 dans laquelle
R¹ et R² peuvent être identiques ou différents et sont choisis parmi
l'hydrogène,
les groupes alkyle ayant 1 à 10 atomes de carbone,
les groupes alkyle ayant 1 à 10 atomes de carbone et portant aussi un ou plusieurs substituants choisis parmi un atome d'halogène, un groupe hydroxyle, un groupe phényle, et un groupe cyano,
les groupes cycloalkyle ayant 3 à 6 atomes de carbone,
un atome d'halogène,
un groupe adamantyle,
un groupe phényle, et
un groupe phényle substitué ;
R³ est choisi parmi
l'hydrogène,
un atome d'halogène,
un groupe cyano,
un groupe hydroxyle,
les groupes alkyle ayant 1 à 4 atomes de carbone,
les groupes alkyle ayant 1 à 4 atomes de carbone et portant aussi un ou plusieurs substituants choisis parmi un atome d'halogène, un groupe hydroxyle, un groupe phényle, et un groupe cyano,
un groupe phényle, et
un groupe phényle substitué ; et
R² et R³ sont raccordés pour former un cycle N-hétérocyclique à 5 ou 6 chaînons ne portant pas de substituant.

6. Procédé selon l'une quelconque des revendications 1 à 5, dans lequel le groupe phényle substitué porte un, deux ou trois substituants, les substituants pouvant être identiques ou
différents et étant choisis parmi un atome d'halogène, un groupe hydroxyle, un groupe alcoxy, et un groupe cyano, les groupes alkyle ayant 1 à 5 atomes de carbone, et les groupes alkyle ayant 1 à 5 atomes de carbone et portant un ou plusieurs substituants choisis parmi les atomes d'halogène, un groupe hydroxyle, un groupe phényle, et un groupe cyano.

7. Procédé selon l'une quelconque des revendications 1 à 6, **caractérisé en ce que** le composé cyclique est choisi parmi un ou plusieurs des suivants, 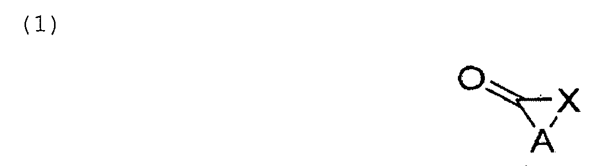 où A est [-(CR¹R²)-]ₙ, n est un entier de 2 à 10 ; R¹ et R² sont identiques ou différents et sont choisis parmi H, les groupes alkyle ayant 1 à 5 atomes de carbone, et les groupes alkyle ayant 1 à 5 atomes de carbone portant des substituants choisis parmi les atomes d'halogène et le groupe hydroxyle, et X est choisi parmi O et N ; 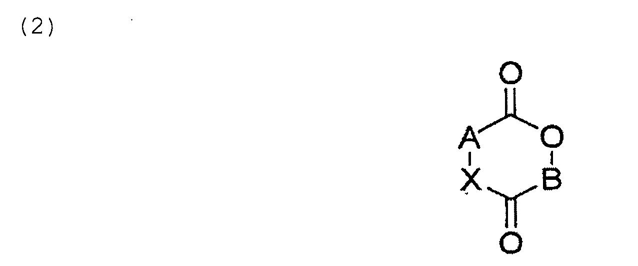 où A et B sont [-(CR¹R²)-]ₙ, n est un entier de 2 à 10, A et B peuvent être identiques ou différents, R¹ et R² sont identiques ou différents et sont choisis parmi H, les groupes alkyle ayant 1 à 5 atomes de carbone, et les groupes alkyle ayant 1 à 5 atomes de carbone portant des substituants choisis parmi les atomes d'halogène et le groupe hydroxyle, et X est choisi parmi O et NH ; 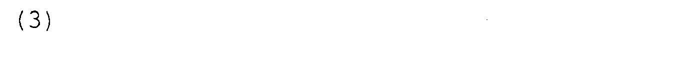 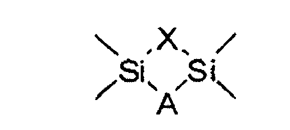 ou les composés cycliques ayant 2 à 5 motifs structurels 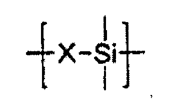 où A est [-(CR¹R²)-]ₙ, n est un entier de 2 à 10 ; R¹ et R² sont identiques ou différents et sont choisis parmi H, les groupes alkyle ayant 1 à 5 atomes de carbone, et les groupes alkyle ayant 1 à 5 atomes de carbone portant des substituants choisis parmi les atomes d'halogène et le groupe hydroxyle, et X est choisi parmi O, N et S ; 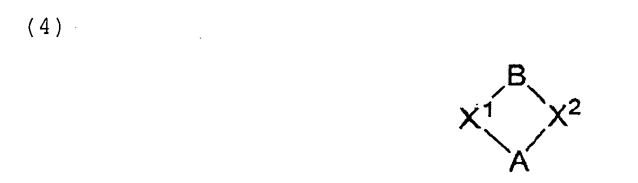 où A est [-(CR¹R²)-]ₙ, n est un entier de 2 à 10 ; R¹ et R² sont identiques ou différents et sont choisis parmi H, les groupes alkyle ayant 1 à 5 atomes de carbone, et les groupes alkyle ayant 1 à 5 atomes de carbone portant des substituants choisis parmi les atomes d'halogène et le groupe hydroxyle ; B est choisi parmi CH₂-O-CH₂, CH₂, et C=O, et X¹ et X² sont identiques ou différents et sont choisis parmi O, N, S et Si.

8. Procédé selon l'une quelconque des revendications 1 à 7, dans lequel le composé cyclique est un oligomère macrocyclique obtenu par prépolymérisation d'un ou plusieurs monomères cycliques décrits dans la revendication 7, et l'oligomère macrocyclique contient 3 à 20 monomères.

9. Procédé selon l'une quelconque des revendications 1 à 8, dans lequel le rapport molaire de l'adduit de dioxyde de carbone et de carbène au composé cyclique est de 1/50 à 1000.

10. Procédé selon la revendication 9, dans lequel le rapport molaire de l'adduit de dioxyde de carbone et de carbène au composé cyclique est de 1/50 à 800.

11. Procédé selon l'une quelconque des revendications 1 à 10, dans lequel un amorceur est utilisé dans la polymérisation, le rapport molaire de l'amorceur au composé cyclique étant de 1/2 à 10000.

12. Procédé selon l'une quelconque des revendications 1 à 11, dans lequel la plage de température régulée dans la polymérisation quand le carbène est libéré pour catalyser la polymérisation par décyclisation du composé cyclique va de-50°C à 200°C.

13. Procédé selon la revendication 12, dans lequel la température est située dans la plage allant de 60°C à 180°C.

14. Procédé selon la revendication 11, dans lequel l'amorceur est un alcool choisi parmi le méthanol, l'éthanol, le propanol, l'isopropanol, le butanol, l'alcool tert-butylique, l'alcool benzylique, l'alcool phénéthylique, l'éthylèneglycol, le diéthylèneglycol, le pentaérythritol.
